# EUROPÄISCHE PATENTSCHRIFT

(11) **EP 1 362 269 B1**
(45) Veröffentlichungstag und Bekanntmachung des Hinweises auf die Patenterteilung: **16.02.2005**
(21) Anmeldenummer: 02716730.3
(22) Anmeldetag: 06.02.2002
(51) Int. Cl.: G05B 19/042

(54) **VERFAHREN UND VORRICHTUNG ZUM PROGRAMMIEREN EINER SICHERHEITSSTEUERUNG**
METHOD AND DEVICE FOR PROGRAMMING A SAFETY CONTROLLER
PROCEDE ET DISPOSITIF DE PROGRAMMATION D'UNE COMMANDE DE SECURITE

(30) Priorität: 20.02.2001 DE 10108962
(43) Veröffentlichungstag der Anmeldung: 19.11.2003
(73) Patentinhaber: Pilz GmbH & CO. KG, 73760 Ostfildern (DE)
(72) Erfinder: KLOPFER, Johannes, 73257 Köngen (DE); RASAEI, Morteza, 73765 Neuhausen (DE); VEIL, Richard, 70597 Stuttgart (DE)
(74) Vertreter: Duhme, Torsten
(86) Internationale Anmeldenummer: PCT/EP2002/001205
(87) Internationale Veröffentlichungsnummer: WO 2002/067065

(56) Entgegenhaltungen:
- US-A- 5 168 441
- US-A- 5 392 207
- US-A- 5 452 201

## Beschreibung

Die vorliegende Erfindung betrifft ein Verfahren zum Programmieren einer Sicherheitssteuerung, mit den Schritten:
- Festlegen von logischen Verknüpfungen zwischen Eingangssignalen der Sicherheitssteuerung und
- Zuordnen von Verknüpfungsprodukten zu Ausgangssignalen der Sicherheitssteuerung,
wobei das Festlegen der Verknüpfungen und das Zuordnen anhand vordefinierter funktionsspezifischer Programmodule erfolgt, die aus einer Menge derartiger Programmodule ausgewählt werden.

Die Erfindung betrifft des weiteren eine Vorrichtung zum Programmieren einer Sicherheitssteuerung, mit ersten Mitteln zum Auswählen und Parametrieren vordefinierter funktionsspezifischer Programmodule, mit deren Hilfe logische Verknüpfungen zwischen Eingangssignalen der Sicherheitssteuerung festgelegt und Verknüpfungsprodukte zu Ausgangssignalen der Sicherheitssteuerung zugeordnet werden können.

Ein Verfahren und eine Vorrichtung der genannten Art sind aus WO 98/44399 oder aus US 5,452,201 bekannt.

Eine Sicherheitssteuerung im Sinne der vorliegenden Erfindung ist ein Gerät oder eine Vorrichtung, das bzw. die von Sensoren gelieferte Eingangssignale aufnimmt und daraus durch logische Verknüpfungen und unter Umständen weitere Signal- oder Datenverarbeitungsschritte Ausgangssignale erzeugt. Die Ausgangssignale können dann Aktuatoren zugeführt werden, die dann in Abhängigkeit von den Eingangssignalen gezielte Aktionen oder Reaktionen in der Umgebung bewirken. Ein bevorzugtes Anwendungsgebiet für derartige Sicherheitssteuerungen ist im Bereich der Maschinensicherheit die Überwachung von Not-Aus-Tastern, Zwei-Hand-Steuerungen, Schutztüren oder Lichtgittern. Derartige Sensoren werden verwendet, um beispielsweise eine Maschine, von der im Betrieb eine Gefahr für Menschen oder materielle Güter ausgeht, abzusichern. Beim Öffnen der Schutztür oder beim Betätigen des Not-Aus-Tasters wird jeweils ein Signal erzeugt, das der Sicherheitssteuerung als Eingangssignal zugeführt ist. In Reaktion darauf schaltet die Sicherheitssteuerung dann beispielsweise mit Hilfe eines Aktuators den gefahrbringenden Teil der Maschine ab.

Charakteristisch an einer Sicherheitssteuerung ist im Gegensatz zu einer "normalen" Steuerung, daß die Sicherheitssteuerung selbst dann, wenn bei ihr oder einem mit ihr verbundenen Gerät eine Fehlfunktion auftritt, stets einen sicheren Zustand der gefahrbringenden Anlage oder Maschine gewährleisten muß. Daher werden bei Sicherheitssteuerungen extrem hohe Anforderungen an die eigene Fehlersicherheit gestellt, was einen erheblichen Aufwand bei der Entwicklung und Herstellung zur Folge hat. In der Regel benötigen Sicherheitssteuerungen vor ihrer Verwendung eine besondere Zulassung durch zuständige Aufsichtsbehörden, wie beispielsweise in Deutschland durch die Berufsgenossenschaften oder den TÜV. Die Sicherheitssteuerung muß dabei vorgegebene Sicherheitsstandards einhalten, die beispielsweise in der europäischen Norm EN 954-1 niedergelegt sind. Im folgenden wird daher unter einer Sicherheitssteuerung ein Gerät bzw. eine Vorrichtung verstanden, die zumindest die Sicherheitskategorie 3 der genannten europäischen Norm erfüllt.

Eine programmierbare Sicherheitssteuerung bietet dem Anwender die Möglichkeit, die logischen Verknüpfungen und gegebenenfalls weiteren Signal- oder Datenverarbeitungsschritte mit Hilfe einer Software, dem sogenannten Anwenderprogramm, seinen Bedürfnissen entsprechend individuell festzulegen. Daraus resultiert eine große Flexibilität im Vergleich zu früheren Lösungen, bei denen die logischen Verknüpfungen durch eine definierte Verdrahtung zwischen verschiedenen Sicherheitsbausteinen erzeugt wurden. Ein Problem bei der Programmierung einer Sicherheitssteuerung besteht jedoch darin, daß das zu erstellende Anwenderprogramm selbst ein sicherheitskritisches Element ist, da ein Fehler in dem Anwenderprogramm eine unkontrollierte Situation und damit einen gefährlichen Zustand bei der überwachten Maschine oder Anlage hervorrufen kann. Hinzu kommt, daß das Anwenderprogramm bei der Überwachung einer großen Maschinenanlage mit vielen Sicherheitseinrichtungen sehr komplex und unübersichtlich werden kann, was die Gewährleistung der erforderlichen Fehlersicherheit erheblich erschwert. Dabei können folgenschwere Fehler in dem Anwenderprogramm nicht nur durch menschliches Versagen bei der Programmierung, sondern auch durch nicht-fehlersichere Programmierhilfsmittel verursacht werden. Wenn beispielsweise das Anwenderprogramm für die Sicherheitssteuerung mit Hilfe eines nicht-fehlersicheren, handelsüblichen Personal Computers (PC) erstellt wird, könnten Speicherfehler des PC unbemerkt zu einer folgenschweren Verfälschung des Anwenderprogramms führen.

In der eingangs genannten WO 98/44399 ist ein Verfahren beschrieben, wie mit einem handelsüblichen PC ein sicherheitsgerichtetes Steuerungssystem, d.h. eine Sicherheitssteuerung, programmiert werden kann. Dazu sind in der Sicherheitssteuerung funktionsspezifische Programmodule in Form von sogenannten Software-Makros abgelegt. Zur Erstellung des Anwenderprogramms erzeugt der Anwender mit Hilfe des PCs Programmodul-Funktionsaufrufe, die anschließend an die Sicherheitssteuerung übertragen werden. Mit Hilfe der Programmodul-Funktionsaufrufe werden die benötigten Programmodule in der Sicherheitssteuerung aufgerufen und zu dem eigentlichen Anwenderprogramm zusammengestellt. Das Programmiergerät, d.h. der PC, dient lediglich dazu, die benötigten Programmodule auszuwählen und zusammenzustellen. Die Programmodule selbst können so nicht verändert werden, und somit kann der PC auch keinen Einfluß darauf ausüben.

Das bekannte Verfahren vereinfacht die Programmierung einer Sicherheitssteuerung. Zudem wird eine gewisse Sicherheit zusätzlich dadurch erreicht, daß die an die Sicherheitssteuerung übertragenen Programmodul-Funktionsaufrufe in das Programmiergerät zurückgelesen werden und dort vom Anwender rückbestätigt werden müssen. Das bekannte Verfahren ist jedoch im Hinblick auf die Fehlersicherheit beim Erstellen eines Anwenderprogramms noch nicht optimal.

In der ebenfalls bereits genannten US 5,452,201 ist ein Verfahren zum Programmieren einer industriellen Steuerung beschrieben. Die Programmierung erfolgt danach in einem graphischen Programmierbereich, in dem graphische Symbole, die Bestandteile der Steuerung repräsentieren, über Linien miteinander verbunden werden, wobei die Linien eine gewünschte Verdrahtung symbolisieren. Innerhalb des graphischen Programmierbereichs können die auswählbaren Symbole frei plaziert und dementsprechend auch frei miteinander verbunden werden.

Es ist daher eine Aufgabe der vorliegenden Erfindung, ein Verfahren und eine Vorrichtung der eingangs genannten Art weiterzubilden, um eine noch höhere Fehlersicherheit beim Programmieren der Sicherheitssteuerung zu erreichen.

Diese Aufgabe wird bei dem eingangs genannten Verfahren dadurch gelöst, daß jedes ausgewählte Programmodul eindeutig einer definierten Funktionsgruppe zugeordnet wird, wobei eine erste Funktionsgruppe Programmodule enthält, die Eingangssignale der Sicherheitssteuerung aufnehmen und in Abhängigkeit davon erste Zwischengrößen bereitstellen, wobei eine zweite Funktionsgruppe Programmodule enthält, die die ersten Zwischengrößen logisch miteinander verknüpfen und in Abhängigkeit davon zweite Zwischengrößen bereitstellen, wobei eine dritte Funktionsgruppe Programmodule enthält, die die zweiten Zwischengrößen den Ausgangssignalen der Sicherheitssteuerung zuordnen, und wobei jedes Programmodul der ersten Funktionsgruppe eine definierte Signalquelle fehlersicher auswertet.

Die Aufgabe wird bei einer Vorrichtung der eingangs genannten Art dadurch gelöst, daß weitere Mittel vorhanden sind, die ein ausgewähltes Programmodul eindeutig einer entsprechend definierten Funktionsgruppe zuordnen, und daß die Programmodule der ersten Funktionsgruppe dazu ausgebildet sind, eine definierte Signalquelle fehlersicher auszuwerten.

Die hiernach zwingende Zuordnung eines ausgewählten Programmoduls zu einer der definierten Funktionsgruppen bewirkt eine sehr übersichtliche und strukturierte Programmierung der Sicherheitssteuerung. Dies hat zur Folge, daß Fehlermöglichkeiten beim Programmieren reduziert werden. Bei einer unstrukturierten Programmierung ist es beispielsweise möglich, daß unerkannte Rückwirkungen zwischen verschiedenen Teilen des erzeugten Anwenderprogramms gebildet werden. Solche Rückwirkungen können zu Laufzeitproblemen oder sogar zu "Schwingungen" führen, die einen instabilen und gefährlichen Zustand zur Folge haben. Diese Fehlerquellen werden durch die hier vorgeschlagene, erzwungene Strukturierung beim Programmieren erheblich reduziert, wenn nicht gar vollständig vermieden. Des weiteren vereinfacht sich aufgrund der übersichtlichen und einheitlichen Struktur auch eine Plausibilitätsprüfung des erstellten Anwenderprogramms. Bspw. ist nunmehr leichter und damit auch zuverlässiger zu überprüfen, ob ein Programmodul aus der ersten Funktionsgruppe nur über eine eindeutige Zwischengröße einem Logikmodul aus der zweiten Funktionsgruppe zugewiesen ist.

Darüber hinaus läßt sich ein erfindungsgemäß strukturiertes Programm leichter warten, d.h. nachträglich verändern oder erweitern, wodurch Fehlerquellen auch bei derartigen Tätigkeiten reduziert sind. Ferner führt die vorgegebene Struktur auch beim Programmieren selbst zu einer größeren Übersichtlichkeit, wodurch die Gefahr menschlicher Fehler, wie beispielsweise das Vergessen einzelner erforderlicher Verknüpfungen, ebenfalls reduziert wird.

Definierte Signalquellen in diesem Sinne sind beispielsweise Not-Aus-Taster, Schutztüren und jegliche anderen Sensoren, die sicherheitsrelevante Signale liefern. Die Programmodule der ersten Funktionsgruppe werten diese Sensoren eigenständig aus und liefern daher als erste Zwischengröße eine fehlersichere Information darüber, in welchem Zustand sich der entsprechende Sensor befindet. Die Maßnahme besitzt den Vorteil, daß die erste Zwischengröße eine "physikalische" Bedeutung besitzt, die für den Programmierer des Anwenderprogramms sehr gut nachvollziehbar ist. Daher wird die Struktur beim Programmieren besonders anschaulich, wodurch Fehlerquellen weiter verringert sind.

Das Programmieren wird durch die Aufgliederung in die definierten Funktionsgruppen insgesamt übersichtlicher und damit sogar auch komfortabler. Gleichzeitig kann ein großer Vorteil des bekannten Verfahrens, daß nämlich der Programmierer beim Erstellen des Anwenderprogramms nur noch auf vorgefertigte Programmodule zurückgreift, in vollem Umfang beibehalten werden. Das Anwenderprogramm wird dabei ausschließlich aus überprüften, fehlersicheren Programmodulen zusammengestellt, was Fehlerquellen ebenfalls reduziert.

In einer bevorzugten Ausgestaltung der Erfindung wird jedes Programmodul genau einer von insgesamt drei definierten Funktionsgruppen zugeordnet.

In dieser Ausgestaltung ist die Struktur beim Programmieren in exakt drei Ebenen aufgeteilt. Dies entspricht der natürlichen Grundstruktur der zu erstellenden Anwenderprogramme, bei denen zunächst Eingangssignale aufgenommen werden (erste Ebene), anschließend die aufgenommenen Signale verarbeitet werden (zweite Ebene) und schließlich die Verarbeitungsergebnisse nach außen abgegeben werden, um Aktionen auszulösen (dritte Ebene). In dieser Ausgestaltung ist die Programmierstruktur daher optimal an die Gegebenheiten angepaßt und daher besonders einfach und übersichtlich. Die Gefahr von Fehlern beim Programmieren ist daher noch weiter reduziert.

In einer weiteren Ausgestaltung der Erfindung wird beim Auswählen eines jeden Programmoduls ein Programmodul-Funktionsaufruf generiert und in einer Ablauftabelle abgespeichert.

Diese Ausgestaltung der Erfindung ermöglicht es, vorbereitete und zertifizierte Programmodule stationär in der Sicherheitssteuerung abzulegen. Das vom Programmierer mit Hilfe seines Programmiergerätes erstellte Anwenderprogramm kann sich dann auf eine Aneinanderreihung von Programmodul-Funktionsaufrufen beschränken. Ein solches Anwenderprogramm benötigt vergleichsweise wenig Speicherplatz und kann somit einfach und schnell an die Sicherheitssteuerung übertragen werden. Es kann auch leichter überprüft werden. Zudem sind die Programmodule als wesentliche sicherheitskritische Elemente dem Zugriff des Programmierers entzogen. Insgesamt wird hierdurch sowohl der Komfort als auch die Fehlersicherheit beim Programmieren weiter verbessert.

In einer weiteren Ausgestaltung werden die Programmodul-Funktionsaufrufe nach den Funktionsgruppen getrennt in der Ablauftabelle gespeichert.

Diese Maßnahme besitzt den Vorteil, daß sich die erfindungsgemäße Struktur nicht nur beim Programmieren selbst, sondern auch in dem dabei erzeugten Anwenderprogramm niederschlägt. In folge dessen beinhaltet das erzeugte Anwenderprogramm selbst weniger Fehlerquellen, wodurch die Fehlersicherheit weiter verbessert ist.

In einer weiteren Ausgestaltung der zuvor genannten Maßnahme werden die Programmodul-Funktionsaufrufe in der Reihenfolge der Funktionsgruppen abgespeichert.

In dieser Ausgestaltung werden somit zunächst sämtliche Programmodul-Funktionsaufrufe der ersten Funktionsgruppe, anschließend die der zweiten und zuletzt die der dritten Funktionsgruppe abgespeichert. Die Maßnahme besitzt den Vorteil, daß die Reihenfolge der Programmodul-Funktionsaufrufe bereits bei der Erstellung des Anwenderprogramms einen optimalen zeitlichen Ablauf implementiert, der die Fehlersicherheit weiter erhöht.

In einer weiteren Ausgestaltung der Erfindung werden die Programmodule mittels graphischer Symbole auf einer graphischen Benutzeroberfläche dargestellt.

Aufgrund dieser Maßnahme ist es möglich, den eigentlichen Vorgang des Programmierens besonders anschaulich und übersichtlich zu gestalten, wodurch Fehlerquellen aufgrund menschlichen Versagens oder Flüchtigkeit erheblich reduziert werden. Die Fehlersicherheit wird nochmals erheblich gesteigert.

In einer weiteren Ausgestaltung der zuvor genannten Maßnahme werden die Programmodule mittels einer Drag & Drop-Funktion ausgewählt.

Eine Drag & Drop-Funktion ist an sich bereits von graphischen Benutzeroberflächen handelsüblicher PCs bekannt. Hierbei wird ein Element mit einem Eingabegerät, beispielsweise mit Hilfe einer sogenannten Maus, markiert und sodann mit Hilfe des Eingabegerätes an eine gewünschte Stelle verschoben oder kopiert. Eine solche Art der Auswahl ist für den Programmierer sehr einfach und komfortabel. Infolgedessen sind Fehlbedienungen und sich daraus ergebende Fehlerquellen beim Programmieren weiter erheblich reduziert.

In einer weiteren Ausgestaltung der Erfindung werden auch die Funktionsgruppen mittels graphischer Symbole auf einer graphischen Benutzeroberfläche dargestellt.

Auch mit dieser Maßnahme wird die Anschaulichkeit und Übersichtlichkeit beim Programmieren erheblich verbessert, da dem Programmierer die erfindungsgemäße Struktur unmittelbar visualisiert wird. Die Gefahr von Fehlern ist aufgrund der damit unmittelbar möglichen optischen Kontrolle weiter reduziert.

In einer weiteren Ausgestaltung des erfindungsgemäßen Verfahrens wird die Darstellung eines ausgewählten Programmoduls auf der Benutzeroberfläche aus einem abgespeicherten, zugehörigen Programmodul-Funktionsaufruf generiert. Die entsprechende erfindungsgemäße Vorrichtung weist daher einen Speicher zum Abspeichern eines Programmodul-Funktionsaufrufs in Abhängigkeit von einem ausgewählten Programmodul sowie eine Anzeigeeinheit auf, die in Abhängigkeit von dem abgespeicherten Programmodul-Funktionsaufruf eine Darstellung des ausgewählten Programmoduls generiert.

In dieser Ausgestaltung der Erfindung wird ein ausgewähltes Programmodul auf der Benutzeroberfläche erst nach einem Umweg visualisiert. Zunächst wird der zugehörige Programmodul-Funktionsaufruf abgespeichert, und zwar in dem Format, in dem er später der Sicherheitssteuerung zugeführt wird. Erst anschließend wird die Darstellung des ausgewählten Programmoduls aus dem abgespeicherten Programmodul-Funktionsaufruf generiert. Der Programmierer erhält daher stets eine Visualisierung der tatsächlich abgespeicherten Programmodul-Funktionsaufrufe und kann somit unmittelbar erkennen, ob die Abspeicherung mit seiner Vorgabe übereinstimmt. Die Kontrolle der abgespeicherten Programmodul-Funktionsaufrufe erfolgt hier somit direkt bei der Auswahl, wodurch Fehler beim Programmieren nochmals erheblich reduziert sind. Zudem können weitere Kontrollen der abgespeicherten Programmodul-Funktionsaufrufe entfallen, wodurch die Programmierung bei einer hohen Fehlersicherheit insgesamt sehr einfach und komfortabel möglich ist.

Darüber hinaus besitzt die Maßnahme den Vorteil, daß der Programmierer das erstellte Anwenderprogramm sehr einfach graphisch dokumentieren kann. Daher ist die spätere Pflege des Anwenderprogramms sehr einfacher und fehlersicher möglich.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer erfindungsgemäßen Vorrichtung in Verbindung mit einer zu programmierenden Sicherheitssteuerung und
- Fig. 2: eine vereinfachte Darstellung einer graphischen Benutzeroberfläche zum Programmieren einer Sicherheitssteuerung.

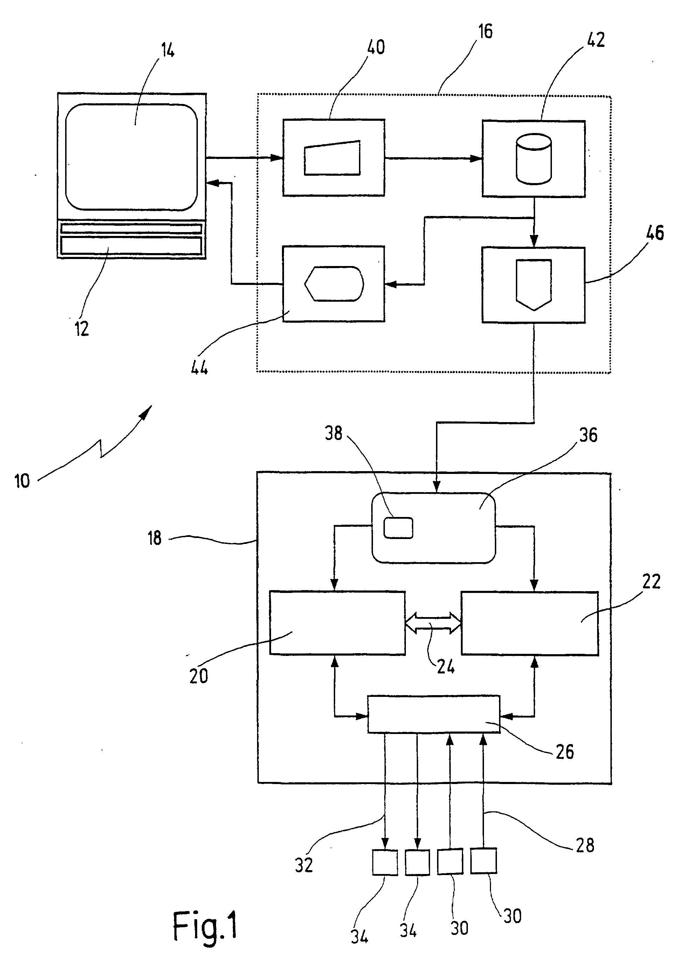

In Fig. 1 ist eine erfindungsgemäße Vorrichtung in ihrer Gesamtheit mit der Bezugsziffer 10 bezeichnet.

Die Vorrichtung 10 beinhaltet einen herkömmlichen PC 12 mit einem Monitor 14, auf dem ein Computerprogramm 16 ausgeführt wird. Das Computerprogramm 16 ermöglicht die Erstellung eines Anwenderprogramms für eine Sicherheitssteuerung. Es wird in der Fachterminologie daher häufig auch als Programmiertool bezeichnet.

Die zu programmierende Sicherheitssteuerung ist in Fig. 1 mit der Bezugsziffer 18 bezeichnet. Sie ist zweikanalig-redundant aufgebaut, um die erforderliche Fehlersicherheit zum Steuern sicherheitskritischer Prozesse zu erreichen. Stellvertretend für den zweikanaligen Aufbau sind in Fig. 1 zwei voneinander getrennte Prozessoren 20, 22 dargestellt, die über eine bidirektionale Kommunikationsschnittstelle 24 miteinander in Verbindung stehen, um sich gegenseitig kontrollieren und Daten austauschen zu können. Bevorzugt sind die beiden Kanäle der Sicherheitssteuerung 18 und die beiden Prozessoren 20, 22 diversitär, d.h. verschieden voneinander aufgebaut, um systematische Fehler weitgehend auszuschließen.

Mit der Bezugsziffer 26 ist eine Ein-/Ausgabeeinheit bezeichnet, die mit jedem der beiden Prozessoren 20, 22 in Verbindung steht. Die Ein-/Ausgabeeinheit nimmt Eingangssignale 28 von externen Sensoren 30 auf und leitet diese in einem angepaßten Datenformat an jeden der beiden Prozessoren 20, 22 weiter. Ferner erzeugt die Ein-/Ausgabeeinheit in Abhängigkeit von den Prozessoren 20, 22 Ausgangssignale 32, mit denen Aktuatoren 34 angesteuert werden. Bei den Sensoren 30 handelt es sich beispielsweise um Not-Aus-Taster, Zwei-Hand-Steuerungen, Schutztüren, Drehzahlüberwachungsgeräte oder andere Sensoren zur Aufnahme sicherheitsrelevanter Parameter. Die Aktuatoren 34 sind beispielsweise sogenannte Schütze, mit denen die Stromversorgung eines Antriebes oder einer kompletten Maschine abgeschaltet werden kann.

Mit der Bezugsziffer 36 ist eine Chipkarte bezeichnet, auf der ein Anwenderprogramm 38 abgespeichert wird. Das Anwenderprogramm 38 wird mit Hilfe der Vorrichtung 10 erstellt, und es legt die von der Sicherheitssteuerung 18 durchzuführenden Steuerungsaufgaben fest. Die Verwendung einer Chipkarte 36 als Speichermedium ermöglicht dabei einen einfachen Austausch des Anwenderprogramms 38 auch ohne direkten Anschluß an die Vorrichtung 10. Alternativ hierzu kann das Anwenderprogramm 38 auch in einem fest in der Sicherheitssteuerung 18 eingebauten Speicher, beispielsweise einem EEPROM, abgespeichert sein.

Das Computerprogramm 16 stellt auf dem Monitor 14 des PCs 12 eine nachfolgend näher erläuterte Benutzeroberfläche bereit. Die Benutzeroberfläche ermöglicht einem Programmierer die Auswahl und Parametrierung vordefinierter funktionsspezifischer Programmodule, die ihrerseits fest in der Sicherheitssteuerung 18 abgespeichert sind. Der Programmierer kann die einzelnen Programmodule jedoch nur auswählen und miteinander kombinieren, er kann sie nicht selbst verändern.

Die Auswahl und Parametrierung der vordefinierten Programmodule ist in Fig. 1 durch einen Funktionsblock 40 symbolisiert. Nachdem der Programmierer ein gewünschtes Programmodul ausgewählt und gegebenenfalls parametriert hat, wird dieses in einem Speicher 42 des PCs abgespeichert, und zwar im Format der Sicherheitssteuerung 18. "Im Format der Sicherheitssteuerung" bedeutet dabei, daß ein Programmodul-Funktionsaufruf generiert und abgespeichert wird, der in dieser Form später auch der Chipkarte 36 zugeführt wird. Der abgespeicherte Programmodul-Funktionsaufruf stellt einen Programmbefehl im Anwenderprogramm 38 dar.

Gemäß dem hier dargestellten Ausführungsbeispiel erzeugt das Computerprogramm 16 mit Hilfe des Funktionsblocks 44 aus dem abgespeicherten Programmodul-Funktionsaufruf eine symbolische Darstellung des entsprechenden, zugehörigen Programmoduls auf der Benutzeroberfläche des PCs 12. Für den Programmierer bedeutet dies, daß er in der nachfolgend näher erläuterten Art und Weise ein Programmodul auswählt, und allein aus der Tatsache, daß ihm die gewünschte Auswahl visualisiert wird, folgt, daß der richtige zugehörige Programmodul-Funktionsaufruf in dem Speicher 42 abgespeichert wurde.

Wenn der Programmierer sämtliche für sein Anwenderprogramm benötigten Programmodule ausgewählt und gegebenenfalls parametriert hat, liegt das vollständige Anwenderprogramm in dem Speicher 42. Bevorzugt wird es dort zusätzlich mit einer CRC (Cyclic Redundancy Check) abgesichert. Von dem Speicher 42 aus kann das Anwenderprogramm dann mit dem Funktionsblock 46 in an sich bekannter Weise auf die Chipkarte 36 übertragen werden. Durch die Absicherung mit der CRC wird dabei sichergestellt, daß das auf der Chipkarte 36 abgespeicherte Anwenderprogramm exakt mit dem zuvor generierten und im Speicher 42 abgelegten Anwenderprogramm übereinstimmt.

Die Chipkarte 36 kann bei der Übertragung in der Sicherheitssteuerung 18 eingesteckt sein, was eine entsprechende Kommunikationsverbindung zwischen dem PC 12 und der Sicherheitssteuerung 18 erfordert. Alternativ kann die Chipkarte 36 auch über ein an sich bekanntes Ladegerät (hier nicht dargestellt) mit dem Anwenderprogramm 38 beschrieben werden. Die Sicherheitssteuerung 18 wird dann durch einfaches Einstecken der beschriebenen Chipkarte 36 mit dem Anwenderprogramm 38 versorgt.

Gemäß einem weiteren bevorzugten Ausführungsbeispiel der Erfindung arbeiten die beiden Prozessoren 20, 22 das Anwenderprogramm 38 diversitär ab. Dies kann beispielsweise mit Hilfe an sich funktionsgleicher, jedoch unterschiedlicher Programmodule geschehen, die durch einen einheitlichen Programmodul-Funktionsaufruf aktiviert werden. Ein Vergleich der jeweiligen Ergebnisse zwischen den beiden Prozessoren 20, 22 ermöglicht dann eine fehlersichere Überprüfung des Anwenderprogramms 38. Auf diese Weise ist es möglich, ein Anwenderprogramm 38 fehlersicher gestalten, ohne sämtliche denkbaren Kombinationen der zur Verfügung stehenden Programmodule einzeln zu überprüfen.

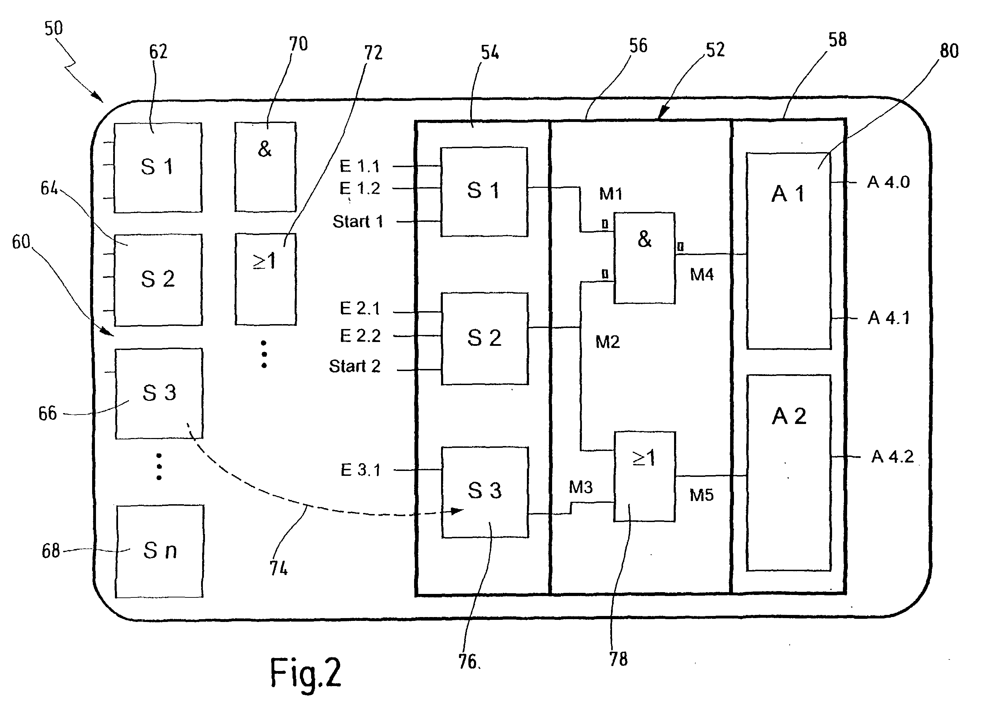

In Fig. 2 ist eine graphische Benutzeroberfläche, die das Computerprogramm 16 dem Programmierer auf dem Monitor 14 bereitstellt, in ihrer Gesamtheit mit der Bezugsziffer 50 bezeichnet.

Die Benutzeroberfläche 50 beinhaltet ein Programmierfeld 52, das gemäß dem hier dargestellten, bevorzugten Ausführungsbeispiel der Erfindung graphisch in drei getrennte Funktionsgruppen 54, 56, 58 gegliedert ist. Außerhalb des Programmierfeldes 52 ist eine Menge 60 auswählbarer Programmodule 62, 64, 66, 68, 70, 72 in Form von graphischen Symbolen dargestellt. Die Auswahl eines dieser Programmodule erfolgt, indem man das entsprechende Symbol mit Hilfe einer Drag & Drop-Funktion in die dafür vorgesehene Funktionsgruppe des Programmierfeldes 52 bewegt, wie dies anhand eines Pfeils 74 beispielhaft dargestellt ist. Auf diese Weise ausgewählte Programmodule sind beispielhaft mit den Bezugsziffern 76, 78, 80 bezeichnet.

Die zur Auswahl stehenden Programmodule 62-72 lassen sich grob in drei verschiedene Typen einteilen, die den drei definierten Funktionsgruppen 54, 56, 58 entsprechen. Die Funktionsgruppe 54 nimmt Programmodule 62-68 auf, die jeweils eine definierte Signalquelle, d.h. einen definierten Sensor 30, eigenständig fehlersicher auswerten. Die Programmodule 62-68 werden dementsprechend auch als Sensor-Module bezeichnet. Jedes Sensor-Modul 62-68 ist an einen bestimmten Sensortyp angepaßt, wie beispielsweise an einen Not-Aus-Taster, eine Schutztür oder eine Zwei-Hand-Steuerung. Bei dem Sensor-Modul 62 handelt es sich beispielsweise um ein Programmodul zur fehlersicheren Auswertung einer Signalquelle mit zwei redundanten Schließerkontakten und mit überwachtem Start. Sensor-Modul 64 dient beispielsweise zur fehlersicheren Auswertung einer Signalquelle mit einem Schließer- und einem Öffnerkontakt sowie mit nicht-überwachtem Start. Sensor-Modul 66 dient beispielsweise zur Auswertung einer Signalquelle mit nur einem Öffnerkontakt. Weitere Sensor-Module 68 dienen zur Auswertung von Signalquellen mit Halbleiterausgängen, wie beispielsweise Lichtschranken. Insgesamt beinhaltet die Menge 60 Sensor-Module für alle in Betracht kommenden Sensoren 30.

Die Sensor-Module 62-68, die der ersten Funktionsgruppe 54 zugeordnet werden können, erhalten als Eingangsparameter die Eingangssignale 28 der Sensoren 30. Als Übergabeparameter stellen sie erste Zwischengrößen bereit, die in der Fachterminologie als Merker bezeichnet werden. In der beispielhaften Darstellung in Fig. 2 sind als erste Zwischengrößen die Merker M1, M2 und M3 an den Ausgängen von insgesamt drei ausgewählten Sensor-Modulen dargestellt.

Die Funktionsgruppe 56 dient ausschließlich zur Aufnahme von Programmodulen, die die ersten Zwischengrößen logisch miteinander verknüpfen und in Abhängigkeit davon zweite Zwischengrößen bereitstellen. In der Darstellung in Fig. 2 werden beispielsweise die beiden Merker M1 und M2 mit einem logischen UND verknüft. Die Merker M2 und M3 werden mit einem logischen ODER verknüpft. An den Ausgängen der entsprechenden Programmodule stehen dann die zweiten Zwischengrößen M4 und M5 bereit.

Zusätzlich zu den hier gezeigten Logik-Modulen dient die zweite Funktionsgruppe 56 auch zur Aufnahme von anderen Programmodulen, die die ersten Zwischengrößen zu zweiten Zwischengrößen weiterverarbeiten, wie beispielsweise Negationen oder Zeitverzögerungen.

Die dritte Funktionsgruppe 58 dient zur Aufnahme von sogenannten Aktuator-Modulen, d.h. solchen Programmodulen, die aus den zweiten Zwischengrößen Ausgangssignale zur Ansteuerung der Aktuatoren 34 erzeugen. In Fig. 2 dient das Aktuator-Modul 80 beispielsweise zur Ansteuerung zweier redundanter Schütze, mit denen die Stromversorgung eines überwachten Antriebes zweikanalig und damit fehlersicher abgeschaltet werden kann.

Die Erstellung des Anwenderprogramms 38 für die Sicherheitssteuerung 18 erfolgt durch Auswahl und Verknüpfung der gewünschten Programmodule 62-72. Mit dem Auswählen eines gewünschten Programmoduls erzeugt das Computerprogramm 16 einen entsprechend zugehörigen Programmodul-Funktionsaufruf, der in einer sogenannten Ablauftabelle in dem Speicher 42 abgespeichert wird. Für den in Fig. 2 beispielhaft dargestellten Programmiervorgang ergibt sich dabei folgende Ablauftabelle:

| **Zeile** | **Modul-Typ** | **Ausgang 1** | **Ausgang 2** | **Eingang 1** | **Eingang 2** | **Eingang 3** |
|---|---|---|---|---|---|---|
| 1 | Sensortyp 1 | M1 | - | E 1.1 | E 1.2 | Start 1 |
| 2 | Sensortyp 2 | M2 | - | E 2.1 | E 2.2 | Start 2 |
| 3 | Sensortyp 3 | M3 | - | E 3.1 | - | - |
| 4 | UND | M4 | - | M1 | M2 | - |
| 5 | ODER | M5 | - | M2 | M3 | - |
| 6 | Aktuatortyp 1 | A 4.0 | A 4.1 | M4 | - | - |
| 7 | Aktuatortyp 2 | A 4.2 | - | M5 | - | - |

In der Spalte "Modul-Typ" erscheint der jeweilige Programmodul-Funktionsaufruf, und zwar in einer Codierung, die von der Sicherheitssteuerung 18 gelesen werden kann. In den nachfolgenden Spalten sind die Übergabeparameter genannt, die das entsprechend aufgerufene Programmodul erhält bzw. zurückgibt.

Gemäß einem besonders bevorzugten Ausführungsbeispiel der Erfindung ordnet das Computerprogramm 16 die einzelnen Programmodul-Funktionsaufrufe in der Ablauftabelle in chronologischer Reihenfolge, d.h. in der Reihenfolge der drei Funktionsgruppen 54, 56, 58 an. Damit wird die Struktur, die sich aufgrund der graphischen Benutzeroberfläche 50 bereits beim Programmieren ergibt, in dem letztlich erzeugten und verwendeten Anwenderprogramm 38 fortgesetzt. Es entsteht somit ein klar gegliedertes und strukturiertes Anwenderprogramm 38.

In bevorzugten Ausführungsbeispielen der Erfindung wird das Anwenderprogramm 38 beim Übertragen vom Speicher 42 auf die Chipkarte 36 stets mit einer CRC abgesichert. Auf diese Weise kann eine Verfälschung des Anwenderprogramms beim Übertragen auf die Chipkarte 36 zuverlässig erkannt und gegebenenfalls verhindert werden.

## Patentansprüche

1. Verfahren zum Programmieren einer Sicherheitssteuerung (18), mit den Schritten:
- Festlegen von logischen Verknüpfungen zwischen Eingangssignalen (28) der Sicherheitssteuerung (18) und
- Zuordnen von Verknüpfungsprodukten (M4, M5) zu Ausgangssignalen (32) der Sicherheitssteuerung (18),
wobei das Festlegen der Verknüpfungen und das Zuordnen anhand vordefinierter funktionsspezifischer Programmodule (62-72, 76-80) erfolgt, die aus einer Menge (60) derartiger Programmodule ausgewählt werden, **dadurch gekennzeichnet, daß** jedes ausgewählte Programmodul (76, 78, 80) eindeutig einer definierten Funktionsgruppe (54, 56, 58) zugeordnet wird, wobei eine erste Funktionsgruppe (54) Programmodule (76) enthält, die Eingangssignale (28) der Sicherheitssteuerung (18) aufnehmen und in Abhängigkeit davon erste Zwischengrößen (M1, M2, M3) bereitstellen, wobei eine zweite Funktionsgruppe (56) Programmodule (78) enthält, die die ersten Zwischengrößen (M1, M2, M3) logisch miteinander verknüpfen und in Abhängigkeit davon zweite Zwischengrößen (M4, M5) bereitstellen, wobei eine dritte Funktionsgruppe (58) Programmodule (80) enthält, die die zweiten Zwischengrößen (M4, M5) den Ausgangssignalen (32) der Sicherheitssteuerung (18) zuordnen, und wobei jedes Programmodul (76) der ersten Funktionsgruppe (54) eine definierte Signalquelle (30) fehlersicher auswertet.

2. Verfahren nach Anspruch 1, **dadurch gekennzeichnet, daß** jedes Programmodul (62-72, 76-80) genau einer von insgesamt drei definierten Funktionsgruppen (54, 56, 58) zugeordnet wird.

3. Verfahren nach Anspruch 1 oder 2, **dadurch gekennzeichnet, daß** beim Auswählen eines jeden Programmoduls (62-72, 76-80) ein Programmodul-Funktionsaufruf generiert und in einer Ablauftabelle abgespeichert wird.

4. Verfahren nach Anspruch 3, **dadurch gekennzeichnet, daß** die Programmodul-Funktionsaufrufe nach den Funktionsgruppen (54, 56, 58) getrennt in der Ablauftabelle abgespeichert werden.

5. Verfahren nach Anspruch 3 oder 4, **dadurch gekennzeichnet, daß** die Programmodul-Funktionsaufrufe in der Reihenfolge der Funktionsgruppen (54, 56, 58) abgespeichert werden.

6. Verfahren nach einem der Ansprüche 1 bis 5, **dadurch gekennzeichnet, daß** die Programmodule (62-72, 76-80) mittels graphischer Symbole auf einer graphischen Benutzeroberfläche (50) dargestellt werden.

7. Verfahren nach Anspruch 6, **dadurch gekennzeichnet, daß** die Programmodule (62-72, 76-80) mittels einer Drag & Drop-Funktion (74) ausgewählt werden.

8. Verfahren nach einem der Ansprüche 1 bis 7, **dadurch gekennzeichnet, daß** die Funktionsgruppen (54, 56, 58) mittels graphischer Symbole auf einer graphischen Benutzeroberfläche (50) dargestellt werden.

9. Verfahren nach einem der Ansprüche 6 bis 8, **dadurch gekennzeichnet, daß** die Darstellung eines ausgewählten Programmoduls (76, 78, 80) auf der Benutzeroberfläche (50) aus einem abgespeicherten, zugehörigen Programmodul-Funktionsaufruf generiert wird.

10. Vorrichtung zum Programmieren einer Sicherheitssteuerung (18), mit ersten Mitteln (12, 14, 16) zum Auswählen und Parametrieren vordefinierter funktionsspezifischer Programmodule (62-72, 76-80), mit deren Hilfe logische Verknüpfungen zwischen Eingangssignalen (28) der Sicherheitssteuerung (18) festgelegt und Verknüpfungsprodukte (M4, M5) zu Ausgangssignalen (32) der Sicherheitssteuerung (18) zugeordnet werden können, **dadurch gekennzeichnet, daß** weitere Mittel (52) vorhanden sind, die ein ausgewähltes Programmodul (76, 78, 80) eindeutig einer definierten Funktionsgruppe (54, 56, 58) zuordnen, wobei eine erste Funktionsgruppe (54) Programmodule (76) enthält, die Eingangssignale (28) der Sicherheitssteuerung (18) aufnehmen und in Abhängigkeit davon erste Zwischengrößen (M1, M2, M3) bereitstellen, wobei eine zweite Funktionsgruppe (56) Programmodule (78) enthält, die die ersten Zwischengrößen (M1, M2, M3) logisch miteinander verknüpfen und in Abhängigkeit davon zweite Zwischengrößen (M4, M5) bereitstellen, wobei eine dritte Funktionsgruppe (58) Programmodule (80) enthält, die die zweiten Zwischengrößen (M4, M5) den Ausgangssignalen (32) der Sicherheitssteuerung (18) zuordnen, und wobei die Programmodule (76) der ersten Funktionsgruppe (54) dazu ausgebildet sind, eine definierte Signalquelle (30) fehlersicher auszuwerten.

11. Vorrichtung nach Anspruch 10, **gekennzeichnet durch** einen Speicher (42) zum Abspeichern eines Programmodul-Funktionsaufrufs in Abhängigkeit von einem ausgewählten Programmodul (76, 78, 80) sowie eine Anzeigeeinheit (14, 44), die in Abhängigkeit von dem abgespeicherten Programmodul-Funktionsaufruf eine Darstellung des ausgewählten Programmoduls (76, 78, 80) generiert.

12. Computerprogramm mit Programmcodemitteln zum Durchführen eines Verfahrens nach einem der Ansprüche 1 bis 9, wenn das Computerprogramm (16) auf einem Computer (12) ausgeführt wird.

13. Anwenderprogramm für eine Sicherheitssteuerung (18), mit Funktionsaufrufen für Programmodule (76, 78, 80), deren Abarbeitung in einer Prozessoreinheit (20, 22) der Sicherheitssteuerung (18) eine logische Verknüpfung von Eingangssignalen (28) sowie eine Zuordnung zu Ausgangssignalen (32) der Sicherheitssteuerung (18) bewirkt, **dadurch gekennzeichnet, daß** jedes Programmmodul (76, 78, 80) eindeutig einer von zumindest drei definierten Funktionsgruppen (54, 56, 58) zugeordnet ist und daß die Funktionsaufrufe in den zumindest drei Funktionsgruppen (54, 56, 58) geordnet sind, wobei eine erste Funktionsgruppe (54) Programmmodule (76) beinhaltet, die Eingangssignale (28) der Sicherheitssteuerung (18) aufnehmen und in Abhängigkeit davon erste Zwischengrößen (M1, M2, M3) bereitstellen, wobei eine zweite Funktionsgruppe (56) Programmmodule (78) beinhaltet, die die ersten Zwischengrößen (M1, M2, M3) logisch miteinander verknüpfen und in Abhängigkeit davon zweite Zwischengrößen (M4, M5) bereitstellen, wobei eine dritte Funktionsgruppe (58) Programmmodule (80) beinhaltet, die die zweiten Zwischengrößen (M4, M5) den Ausgangssignalen (32) der Sicherheitssteuerung (18) zuordnen, und wobei die Programmmodule (76) der ersten Funktionsgruppe (54) dazu ausgebildet sind, eine definierte Signalquelle (30) fehlersicher auszuwerten.

14. Computerprogrammprodukt mit einem Speichermedium (36), auf dem ein Computerprogramm (16) nach Anspruch 12 oder ein Anwenderprogramm (38) nach Anspruch 13 gespeichert ist.

## Claims

1. A method of programming a failsafe control system (18), comprising the steps of:
- defining logical interconnections between input signals (28) of the failsafe control system (18) and
- assigning interconnection products (M4, M5) to output signals (32) of the failsafe control system (18),
with the definition of the interconnections and the assignment taking place on the basis of predefined function-specific program modules (62-72, 76-80), which are selected from a set (60) of such program modules, **characterized in that** each selected program module (76, 78, 80) is uniquely assigned to a defined functional group (54, 56, 58), a first functional group (54) containing program modules (76) which pick up input signals (28) of the failsafe control system (18) and, in dependence on them, provide first interim variables (M1, M2, M3), a second functional group (56) containing program modules (78) which logically interconnect the first interim variables (M1, M2, M3) to one another and, in dependence on them, provide second interim variables (M4, M5), and a third functional group (58) containing program modules (80) which assign the second interim variables (M4, M5) to the output signals (32) of the failsafe control system (18), with each program module (76) of the first functional group (54) evaluating a defined signal source (30) in a failsafe manner.

2. The method of claim 1, **characterized in that** each program module (62 - 72, 76 - 80) is assigned to precisely one of a total of three defined functional groups (54, 56, 58).

3. The method of claim 1 or 2, **characterized in that** a program-module function call is generated and stored in a sequence table, whenever a program module (62-72, 76-80) is selected.

4. The method of claim 3, **characterized in that** the program-module function calls are stored in the sequence table separately according to the functional groups (54, 56, 58).

5. The method of claim 3 or 4, **characterized in that** the program-module function calls are stored in the sequence of the functional groups (54, 56, 58).

6. The method of any of claims 1 to 5, **characterized in that** the program modules (62 - 72, 76 - 80) are represented by means of graphic symbols on a graphic user interface (50).

7. The method of claim 6, **characterized in that** the program modules (62 - 72, 76 - 80) are selected by means of a drag & drop function (74).

8. The method of any of claims 1 to 7, **characterized in that** the functional groups (54, 56, 58) are represented by means of graphic symbols on a graphic user interface (50).

9. The method of any of claims 6 to 8, **characterized in that** the representation of a selected program module (76, 78, 80) on the user interface (50) is generated from a stored, associated program-module function call.

10. A device for programming a failsafe control system (18), having first means (12, 14, 16) for selecting and parameterizing predefined function-specific program modules (62-72, 76-80), by means of which logical interconnections can be defined between input signals (28) of the failsafe control system (18) and connection products (M4, M5) can be assigned to output signals (32) of the failsafe control system (18), **characterized by** further means (52), which uniquely assign a selected program module (76, 78, 80) to a defined functional group (54, 56, 58), a first functional group (54) containing program modules (76) which pick up input signals (28) of the failsafe control system (18) and, in dependence on them, provide first interim variables (M1, M2, M3), a second functional group (56) containing program modules (78) which logically interconnect the first interim variables (M1, M2, M3) to one another and, in dependence on them, provide second interim variables (M4, M5), and a third functional group (58) containing program modules (80) which assign the second interim variables (M4, M5) to the output signals (32) of the failsafe control system (18), wherein the program modules (76) of the first functional group (54) are configured to evaluate a defined signal source (30) in a failsafe manner.

11. The device of claim 10, **characterized by** a memory (42) for storing a program-module function call in dependence on a selected program module (76, 78, 80) and also a display unit (14, 44), which generates a representation of the selected program module (76, 78, 80) in dependence on the stored program-module function call.

12. A computer program having program coding means for carrying out a method of any of claims 1 to 9 when the computer program (16) is executed on a computer (12).

13. A user program for a failsafe control system (18), having function calls for program modules (76, 78, 80), the processing of which in a processor unit (20, 22) of the fail-safe control system (18) achieves a logical interconnection of input signals (28) and an assignment to output signals (32) of the failsafe control system (18), **characterized in that** each program module (76, 78, 80) is uniquely assigned to one of at least three defined functional groups (54, 56, 58), and **in that** said function calls are grouped into said at least three functional groups (54, 56, 58), a first functional group (54) comprising program modules (76) which pick up input signals (28) of the failsafe control system (18) and, in dependence on them, provide first interim variables (M1, M2, M3), a second functional group (56) comprising program modules (78) which logically interconnect the first interim variables (M1, M2, M3) to one another and, in dependence on them, provide second interim variables (M4, M5), and a third functional group (58) comprising program modules (80) which assign the second interim variables (M4, M5) to the output signals (32) of the failsafe control system (18), wherein the program modules (76) of the first functional group (54) are configured to evaluate a defined signal source (30) in a fail-safe manner.

14. A computer program product having a storage medium (36), on which a computer program (16) according to claim 12 or a user program (38) according to claim 13 is stored.

## Revendications

1. Procédé de programmation d'une commande de sécurité (18), comprenant les étapes de :
- définition des combinaisons logiques entre des signaux d'entrée (28) de la commande de sécurité (18), et
- affectation des produits de la combinaison (M4, M5) aux signaux de sortie (32) de la commande de sécurité (18),
la définition des liaisons et l'affectation étant effectuées à l'appui de modules de programme (62-72, 76-80), prédéfinis, spécifiques aux fonctions, qui ont été sélectionnés parmi un ensemble (60) de tels modules de programme, **caractérisé en ce que** chaque module de programme (76, 78, 80) sélectionné est affecté de manière univoque à un groupe fonctionnel (54, 56, 58) défini, un premier groupe fonctionnel (54) contenant des modules de programme (76) qui reçoivent des signaux d'entrée (28) de la commande de sécurité (18) et, en fonction de cela, délivrent des premiers paramètres intermédiaires (M1, M2, M3), un deuxième groupe fonctionnel (56) contenant des modules de programme (78) qui effectuent la combinaison logique entre les premiers paramètres intermédiaires (M1, M2, M3) et, en fonction de cela, délivrent des deuxièmes paramètres intermédiaires (M4, M5), un troisième groupe fonctionnel (58) contenant des modules de programme (80) qui affectent les deuxièmes paramètres intermédiaires (M4, M5) aux signaux de sortie (32) de la commande de sécurité (18), et chaque module de programme (76) du premier groupe fonctionnel (54) exploitant de manière protégée contre les erreurs une source de signaux (30) définie.

2. Procédé selon la revendication 1, **caractérisé en ce que** chaque module de programme (62-72, 76-80) est affecté précisément à un groupe parmi un total de trois groupes fonctionnels (54, 56, 58) définis.

3. Procédé selon la revendication 1 ou 2, **caractérisé en ce que**, au moment de la sélection de chaque module de programme (62-72, 76-80), un appel de fonctionnement du module de programme est généré et enregistré dans une table de traitement.

4. Procédé selon la revendication 3, **caractérisé en ce que** les appels de fonctionnement du module de programme sont enregistrés dans la table de traitement séparément selon les groupes fonctionnels (54, 56, 58).

5. Procédé selon la revendication 3 ou 4, **caractérisé en ce que** les appels de fonctionnement du module de programme sont enregistrés dans l'ordre de succession des groupes fonctionnels (54, 56, 58).

6. Procédé selon l'une des revendications 1 à 5, **caractérisé en ce que** les modules de programme (62-72, 76-80) sont représentés par des icônes sur une interface graphique (50).

7. Procédé selon la revendication 6, **caractérisé en ce que** les modules de programme (62-72, 76-80) sont sélectionnés au moyen d'une fonction glisser-déposer (74).

8. Procédé selon l'une des revendications 1 à 7, **caractérisé en ce que** les groupes fonctionnels (54, 56, 58) sont représentés par des icônes sur une interface graphique (50).

9. Procédé selon l'une des revendications 6 à 8, **caractérisé en ce que** la représentation d'un module de programme (76, 78, 80) sur l'interface graphique (50) est générée à partir d'un appel de fonctionnement du module de programme associé enregistré.

10. Dispositif de programmation d'une commande de sécurité (18), comportant des premiers moyens (12, 14, 16) pour sélectionner et paramétrer des modules de programme (62-72, 76-80), prédéfinis, spécifiques aux fonctions, qui permettent de définir des combinaisons logiques entre des signaux d'entrée (28) de la commande de sécurité (18) et d'affecter des produits de la combinaison (M4, M5) aux signaux de sortie (32) de la commande de sécurité (18), **caractérisé en ce que**.d'autres moyens (52) sont prévus pour affecter de manière univoque un module de programme (76, 78, 80) sélectionné à un groupe fonctionnel (54, 56, 58) défini, un premier groupe fonctionnel (54) contenant des modules de programme (76) qui reçoivent des signaux d'entrée (28) de la commande de sécurité (18) et, en fonction de cela, délivrent des premiers paramètres intermédiaires (M1, M2, M3), un deuxième groupe fonctionnel (56) contenant des modules de programme (78) qui effectuent la combinaison logique entre les premiers paramètres intermédiaires (M1, M2, M3) et, en fonction de cela, délivrent des deuxièmes paramètres intermédiaires (M4, M5), un troisième groupe fonctionnel (58) contenant des modules de programme (80) qui affectent les deuxièmes paramètres intermédiaires (M4, M5) aux signaux de sortie (32) de la commande de sécurité (18), et chaque module de programme (76) du premier groupe fonctionnel (54) étant conçu de manière à exploiter de manière protégée contre les erreurs une source de signaux (30) définie.

11. Dispositif selon la revendication 10, **caractérisé par** une mémoire (42) pour enregistrer un appel de fonctionnement du module de programme en fonction d'un module de programme (76, 78, 80) sélectionné, ainsi que par une unité d'affichage (14, 44) qui, en fonction de l'appel de fonctionnement du module de programme enregistré, génère une représentation du module de programme (76, 78, 80) sélectionné.

12. Programme machine comportant des moyens de codage du programme, destiné à la mise en oeuvre d'un procédé selon l'une des revendications 1 à 9, lorsque le programme machine (16) est exécuté sur un ordinateur (12).

13. Programme utilisateur pour une commande de sécurité (18), comportant des appels de fonctionnement pour des modules de programme (76, 78, 80), dont le traitement dans un processeur (20, 22) de la commande de sécurité (18) entraîne une combinaison logique entre des signaux d'entrée (28), ainsi qu'une affectation aux signaux de sortie (32) de la commande de sécurité (18), **caractérisé en ce que** chaque module de programme (76, 78, 80) est affecté de manière univoque à un groupe parmi au moins trois groupes fonctionnels (54, 56, 58) définis et **en ce que** les appels de fonctionnement sont ordonnés dans lesdits au moins trois groupes fonctionnels (54, 56, 58), un premier groupe fonctionnel (54) contenant des modules de programme (76) qui reçoivent des signaux d'entrée (28) de la commande de sécurité (18) et, en fonction de cela, délivrent des premiers paramètres intermédiaires (M1, M2, M3), un deuxième groupe fonctionnel (56) contenant des modules de programme (78) qui effectuent la combinaison logique entre les premiers paramètres intermédiaires (M1, M2, M3) et, en fonction de cela, délivrent des deuxièmes paramètres intermédiaires (M4, M5), un troisième groupe fonctionnel (58) contenant des modules de programme (80) qui affectent les deuxièmes paramètres intermédiaires (M4, M5) aux signaux de sortie (32) de la commande de sécurité (18), et les modules de programme (76) du premier groupe fonctionnel (54) étant conçus de manière à exploiter de manière protégée contre les erreurs une source de signaux (30) définie.

14. Produit pour programme machine, comportant un support de mémoire (36) sur lequel est enregistré un programme machine (16) selon la revendication 12 ou un programme utilisateur (38) selon la revendication 13.
